Europäisches Patentamt

European Patent Office

Office européen des brevets

(19)

(11) **EP 1 578 027 A2**

(12) # EUROPEAN PATENT APPLICATION

(43) Date of publication:
**21.09.2005 Bulletin 2005/38**

(51) Int Cl.⁷: **H04B 7/005**, H04L 1/00

(21) Application number: **05075699.8**

(22) Date of filing: **01.10.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.11.2000 GB 0029002**

(62) Document number(s) of the earlier application(s) in accordance with Art. 76 EPC:
**01980459.0 / 1 338 098**

(71) Applicant: **Nokia Corporation**
**02150 Espoo (FI)**

(72) Inventor: **Raitola, Mika**
**02430 Masala (FI)**

(74) Representative: **Ruuskanen, Juha-Pekka et al**
**Page White & Farrer,**
**54 Doughty Street**
**London WC1N 2LS (GB)**

Remarks:
This application was filed on 24 - 03 - 2005 as a divisional application to the application mentioned under INID code 62.

(54) **Allocation of shared channel data**

(57)     A controller for a communications system wherein a user equipment (MS1 - MS4) may communicate with a station (10) over at least one communication channel shared with at least two user equipments. The controller is adapted to allocate a data rate to be provided for said user equipment based on information about a determined average power and a common data rate target defined for all user equipments that use the at least one shared communication channel.

Fig. 1

EP 1 578 027 A2

Define a common data rate target for user equipment sharing at least one communication channel

Determine an average power that is used for communication between a user equipment and a base station over a channel that is different the at least one shared channel

Allocate a data rate for said user equipment based on information of the determined average power and the set common data rate target

Fig. 4

## Description

The present invention relates to channels in a communication system, and in particular, but not exclusively, to adaptation of radio channels.

A communication system typically operates in accordance with a given standard or specification which sets out what the various elements of the system are permitted to do and how that should be achieved, i.e. the technology on which the communication is based on. A communication system may comprise one or more communication networks. A communication network is a cellular network. A cellular system consists of access entities typically referred to as cells, hence the name cellular system.

A feature of the cellular system is that it provides mobility for the mobile stations subscribing thereto. That is, the mobile stations are enabled to move within the cell and from a cell to another cell and even from a cellular network to another cellular network if both of the networks are compatible with the standard the mobile station is adapted to.

Examples of the different cellular standards and/or specifications include, without limiting to these, standards such as GSM (Global System for Mobile communications) or various GSM based systems (such as GPRS: General Packet Radio Service), EDGE (Enhanced Data rate for GSM Evolution or CDMA or WCDMA (Code Division Multiple Access or Wideband CDMA) based 3rd generation telecommunication systems such as the Universal Mobile Telecommunication System (UMTS), i-Phone, IS-95 and IMT 2000 (International Mobile Telecommunication System 2000) and so on. It should be appreciated that the terminology used in the different standards may vary from each other.

As mentioned above, an access entity may be formed by a cell. The cell can be defined as a certain area covered by a base transceiver station (BTS) serving user equipment (UE) in the cell coverage area via a wireless interface. The base station forms a part of an radio access network (RAN). It should be appreciated that the size of the cell depends on the system and circumstances. However, each cell is typically provided with at least one base station. The communication between a user equipment (UE) within one of the access entities (such as the cells or other service areas) of the communication system and a base station is typically be controlled by one or several controllers. Examples of the controller nodes include access network controller such as a radio network controller (RNC) and core network controllers such as a serving GPRS support node (SGSN), but other control nodes may also be implemented in the network.

The communication between the base station and the mobile user equipment i.e. mobile station may occur in both uplink direction and downlink direction. The term 'downlink' refers to the direction from the access network base station to the mobile user equipment.

The term 'uplink' refers to the direction from the mobile user equipment to the base station. In communication systems, such as the UMTS, data streams may be transported in the uplink and/or downlink via various radio or wireless communication channels. These channels may be referred to as transport channels. Examples of the transport channels, without limiting to these, include dedicated channels (DHC), downlink shared channels (DSCH), uplink shared channels (USCH) and common packet channels (CPCH).

To give an example of the shared transport channels, release 99 of the WCDMA standard by the third generation partnership project (3GPP) defines shared channels such as a downlink shared channel (DSCH) and a physical downlink shared channel (PDSCH). From these the DSCH is a logical channel. The PDSCH is a physical relation of the DSCH over an air interface. Parameters such as a data transmission rate, referred to in the following as bitrate, and transmission power can be defined for the channels. The user bitrate may be defined by a network controller or alternatively by the base station. Exemplifying bitrate values are such as 1024, 512, 256, 128, 64, 32 and 16 kbps (kilobits per second). The transmission power levels may be set by a base station and/or a network controller or even by a mobile station, depending on the application. In addition to controlling the power levels, the control functions may comprise, among other things, control of the allocated bitrates for data transmissions on the transport channels of the communication system and so on.

The selection of the bitrate and power of the physical downlink shared channel (PDSCH) can be made rather freely. One reason for this is that in the downlink the user equipment does not have to participate in procedure of bitrate or power selection. This is done in the network side, e.g. by the base station or the radio network controller. However, the selected transport format needs to be signalled to the mobile station and thus the appropriate network element informs the user equipment what bitrate it is using for the downlink. Otherwise the user equipment would not know how to decode the received signal. The information can be transmitted by using so called downlink transport format indication bits.

In applications that are capable of transmitting multimedia over wireless interfaces, such as the third generation communication systems, the downlink is considered at present to be the most restrictive transmission direction. This is believed to be so mainly because the traffic is typically asymmetric in the present multimedia applications. That is, in most, but not all, applications the downlink can be substantially more heavily loaded than the uplink.

A possibility to improve the downlink capacity is to use a suitable link adaptation mechanism. The link adaptation mechanism refers in general to a mechanism that allows provision of different data transmission capacity for different users. For example, data may be transmitted with higher bitrates towards those mobile users who are close to the base station and with lower bitrates towards those mobile users who are more remote. Link adaptation is typically used to enhance radio resource management (RRM) functions. The radio resource management may be based on various parameters, such as the measured power levels in the cell and/or interference in the cell. However, the inventor has found that with a shared channel and bursty data these parameters used for the radio resource management may fluctuate substantially lot. This means that the loading of the system can be very unstable. For this reason lower maximum loading limit may have to be used, which leads to decrease in the system capacity.

Embodiments of the present invention aim to address one or several of the problems of the prior art link adaptation techniques.

According to one aspect of the present invention, there is provided a controller for a communications system wherein a user equipment may communicate with a station over at least one communication channel shared with at least two user equipments. The controller is adapted to allocate a data rate to be provided for said user equipment based on information about a determined average power and a common data rate target defined for all user equipments that use the at least one shared communication channel.

According to another aspect of the present invention there is provided a user equipment for communication with a station over at least one communication channel shared with at least two user equipments. The user equipment is provided with a controller that is adapted to set a data rate for said user equipment based on information about a determined average power and a common data rate target defined for all user equipments that use the at least one shared communication channel.

According to another aspect of the present invention there is provided an access network controller for a communications system wherein a user equipment may communicate with a station of the access network over at least one communication channel shared with at least two user equipments. The access network controller is adapted to allocate a data rate to be provided for said user equipment based on information about a determined average power and a common data rate target defined for all user equipments that use the at least one shared communication channel.

In a more specific embodiments of the invention, the allocated data rate depends on the distance between the user equipment and the station, the distance being determined based on the determined average power. The dependency may be such that if the user equipment is located closer to the station than another, more remote user equipment, said one user equipment is provided with a higher data rate that said more remote user equipment. A user equipment determined to be substantially close to the base station may be provided with a data rate that is the common data rate target or substantially close to the common data rate target.

The average power may be determined based on information associated with a dedicated channel that associates with the communication channel used by the user equipment. The average power may alternatively or in addition be determined based on information associated with a Perch channel. The information may comprise the power of said channel.

The data rate target may be defined when the network is planned or upgraded. The data rate target may be adaptive.

The data rate may be adjusted by a controller of the station and/or by a controller of the user equipment. The average transmission power may be the average transmission power by which the station transmits towards the user equipment. The average power may alternatively be the average power in which the station or the user equipment receives.

The embodiments of the invention provide a solution for link adaptation. The solution may be especially advantageous for adaptation of shared channels. The embodiments may reduce interference fluctuations and may thus improve the overall system performance. The embodiments may improve user throughput and overall data transmission capacity. It is, for example, possible to provide those mobile users who are close to a base station with higher data transmission rates than those mobile users who are more remote, whereby a higher cell throughput is provided. The average transmission power i.e. interference which a base station is causing may be kept more stable than in the prior art solutions. This may improve the network operation and may allow higher load targets for the network. This in turn may increase the capacity of the system.

For better understanding of the present invention, reference will now be made by way of example to the accompanying drawings in which:

Figure 1 shows a base station and four differently located mobile stations;
Figure 2 is a diagram illustrating the bitrates allocated for the mobile stations of Figure 1;
Figure 3 is a diagram illustrating the power levels associated with the mobile stations of Figure 1; and
Figure 4 is a flowchart illustrating the operation of one embodiment of the present invention.

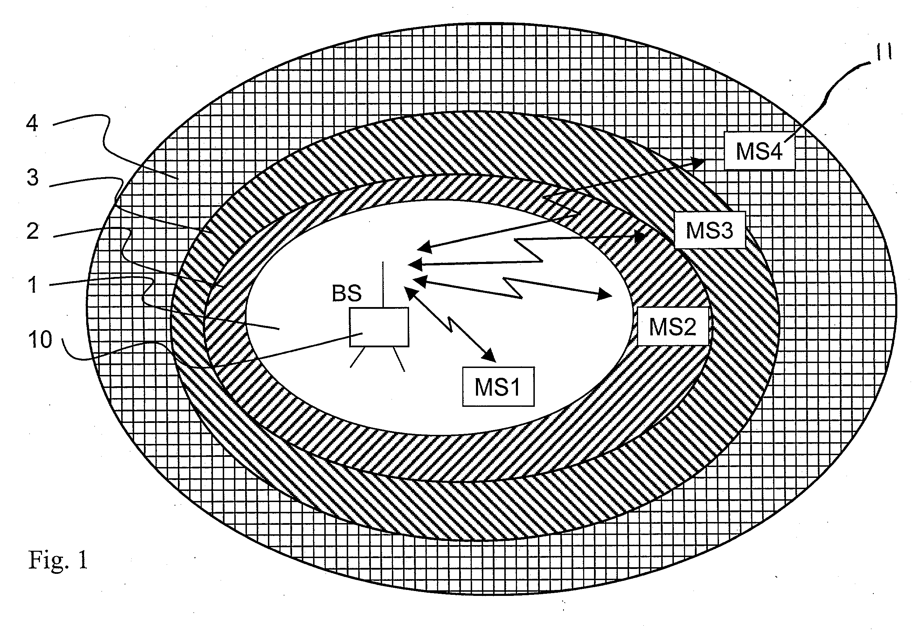

Reference is made to Figure 1 which shows schematically a cell of a cellular communication network. The network may be, for example, but without limiting to this, a third generation Universal Mobile Telecommunication Service (UMTS) network that is based on Wideband Code Division Multiple access (WCDMA) technique. The cell comprises a base station BS. The base station BS is preferably provided with controller means 10 for controlling he operation thereof. The base station BS is shown to be in wireless communication with four mobile stations MS1 to MS4. The mobile stations are shown to be located with different distances from the base stations so that the mobile station MS1 is the closest mobile station to the base station BS and the mobile station MS4 is the most remote mobile station to the base station BS.

The cell of Figure 1 can be seen as to be divided to different bitrate zones based on the distance from the base station BS. Adjustment of data transmission rates between the base station BS and the mobile stations MS1 to MS4 may be based on the required transmission power between the respective mobile station and the base station. The adjustment may be accomplished under the control of the controller 10 of the base station BS. If same bitrate is used for the data transmission, the more far away a mobile station is the more power is needed. On the other hand, if a higher bitrate is to be used more power is needed than with a lower bitrate.

When the system tries to keep the power at the same level for all mobile stations, the far away mobile stations will get lower bitrates than the mobile stations that are closer to the base station. Thus, virtually the cell can be seen as divided into several zones 1 to 4 such that different bitrates are used in each of the virtual zones.

Instead of adjusting the data rates directly based on the location of the mobile stations MS1 to MS4, a dependency between the data rate and the distance from the base station BS can be based on an appropriate parameter indicative of the distance. The parameter may be linear or logarithmic, depending on the application.

In a preferred embodiment of the present invention an average base station transmission power is measured. The average transmission power used for each mobile station is preferably measured by the base station BS. The measurement may be handled under the control of the controller entity 10. Based on the average transmission power, it is possible to determine how close (or far) a mobile station is located relative to the base station. The data transmission rates over the wireless interfaces are then adjusted based on the distance that was determined based on the measured average transmission power. The transmission data rate may be based on the measured average transmission power of a certain link to a certain mobile station.

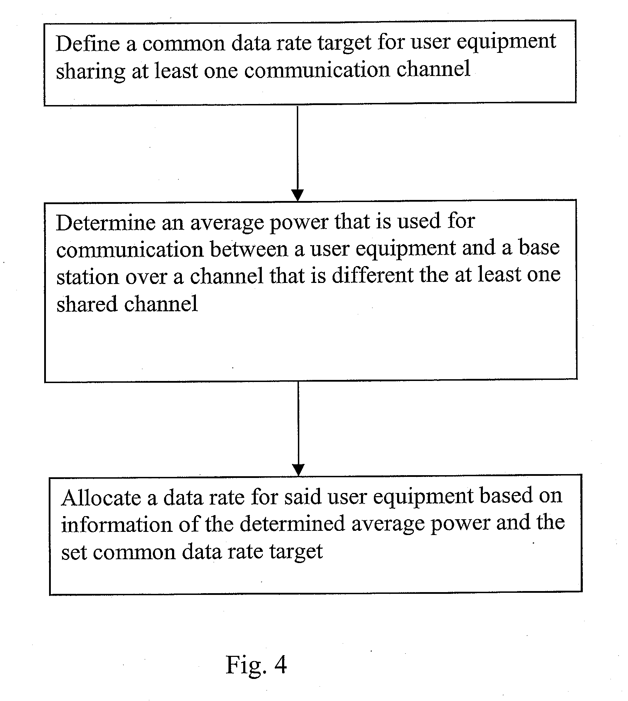

The following will describe, with reference also to Figure 4, an embodiment that relates to shared channels of a third generation WCDMA system. At present a WCDMA based system enables data rate i.e. bitrate values up to about 2 Mbit/s. In the WCDMA based systems a number of downlink shared channel users can be multiplexed into a single shared channel in time domain. Dedicated Shared Channel (DSCH) allows each user to have different transport format set to it. The transport format is used to define the bitrate that is to be used for data transmission over the wireless interface between the base station and the mobile station. The DSCH power and bitrate control may be implemented such that the control is handled by the controller of the base station. The DSCH power and bitrate can be changed substantially rapidly. Therefore the proposed link adaptation is considered to suit especially well for the Dedicated Shared Channel (DSCH).

In the preferred embodiment the user average base station transmission power is measured and the bitrate which the mobile subscriber (i.e. the mobile station) has is set based on information regarding the measurement results. The bitrate target may be set to be a common value for all those mobile stations to whom transmission occurs through a particular shared channel. The target may sometimes be referred to as a setpoint. In general terms, the target refers to a value that is desired for the connection and is a value that one or more of the elements involved in the connection between the base station and the mobile station try to reach.

The target may be set e.g. during network planning or any time thereafter, e.g. during network upgrade.

The target may also be arranged to be slowly adaptive according the load situation i.e. the available or used capacity of the cell. The adaptive target may be controlled by means of the access network controller. The access network controller may be provided by the base station controller 10 or another controller controlling the access network, such as a radio network controller (RNC). The adaptive control is preferably discontinuous such that over predefined and preferably short time periods (say few data frames) the target is kept constant.

For those users who are relatively close to the base station BS the bitrate may be set to be substantially close to a set bitrate target value, such as PtxTargetDSCH. Those mobile stations which are substantially far away, such as the mobile station MS4, the bitrate may be set to be in a substantially lower level than what is provided for the mobile stations closer to the base station.

The data transmission rate i.e. the bitrate is defined based on information of the average transmission power in at least one other channel. The average transmission power can be measured e.g. from the associated dedicated channel (DCH). The DCH can be kept running for a much longer time than the DSCH since the DCH bitrate will in most instances be lower than what the DSCH bitrate is. The transmission power could also be measured from a so called Perch channel before DSCH access. The Perch channel refers to a common pilot channel, in which the power is constant. The Perch channel can also be measured by all mobile stations in a cell. It is used for various measurements, for example measurement associated with handovers, signal reception and so on.

In general, the bitrate of a user in a dedicated shared channel (DSCH) may be set, for example, ac-

cording the following equation:

$$bitrate_{DSCH} = \frac{Ptx_{DSCH} \times EbN0_{DCH}}{Ptx_{DCH} \times EbN0_{DSCH}} \times bitrate_{DCH}$$

In the above equation the Ptx values are the transmission powers of the dedicated channel (DCH) and dedicated shared channel (DSCH) and the EbN0 values correspond the EbN0 values of the respective channels. The term 'EbNo' refers to a connection quality parameter value that is used for defining a signal energy / noise ratio for a connection. The EbNo value may be measured for the connection or the EbNo value may be obtained otherwise from the system, such as based on parameterisation in accordance with a cell average (so called 'EbNO_planned'). The distance is relative to the transmission power needed to reach a certain mobile. Thus the term Ptx_DCH depends on the distance.

It shall be appreciated that the above equation may not necessarily result to a 'good' i.e, exact bitrate value that is used by the system, like 32, 64, 128 kbit/s and so on. Thus, rounding of the calculation result to some discrete bitrate may be needed.

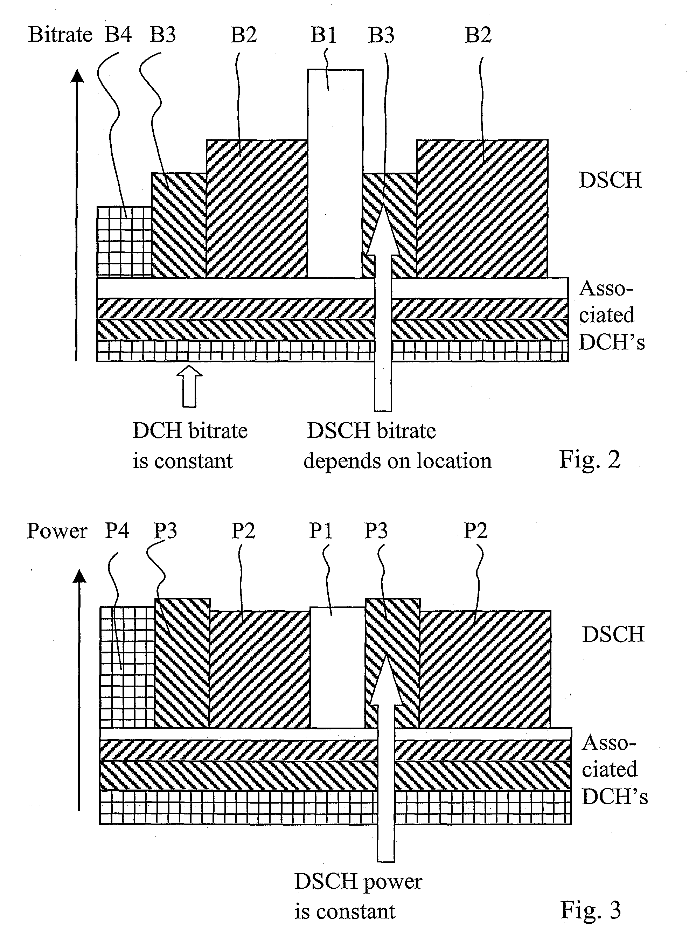

Figures 2 and 3 illustrate the link adaptation result obtained for an embodiment. The patterns used in the diagrams correspond the patterns used for the zones 1 to 4 of Figure 1. In Figure 2, Bitrate B1 is the bitrate provided for mobile station MS1, Bitrate B2 is the bitrate provided for mobile station MS2 and so on. Correspondingly, in Figure 3 power P1 is the average power provided for mobile station MS1, power P2 is the average power provided for mobile station MS2 and so on.

As shown by Figure 2, the a mobile user MS1 within zone 1 and thus substantially close to the base station BS of the cell is provided with a higher bitrate B1 than what is provided for the more remote mobile users MS 2 to MS 4 within zones 2 to 4, respectively. The relative bitrates B2 to B4 provided for these three mobile stations MS2 to MS4 in zones 2 to 4 depend correspondingly from the distance between the base station BS and the respective mobile station.

As shown by Figure 3, the average transmission powers P1 to P4 and thus the interference caused by the base station BS can be kept more stable. This may enhance the operation of the network and may also allow higher load target to be used in network, thus increasing the capacity.

In some embodiments the hardware resources and the radio interface capacity may need to be allocated according the maximum bitrate in the DSCH.

This above embodiment are described with reference to dedicated shared channels (DSCH) for the downlink. However, it shall be appreciated that the invention is also applicable with a uplink shared channel (USCH). The invention may also be applied for any duplex transmission methods in systems employing shared channels. These methods include the TDD (time division duplex) transmission mode, the FDD (frequency division duplex) transmission mode and the SDD (space division duplex) transmission mode. Each of these method may be used for the communication in the 3rd generation communication systems, such as the UMTS.

The average power is typically determined for the transmission power of the base station, for example by means of the controller 10. However, since a mobile station may also transmit in different power levels, it is also possible to base the data rate adjustment on the average transmission power of the mobile station. These operations may be controlled by means of a controller provided in association with the mobile station, such as by means of a controller 11 of the mobile station MS4 of Figure 1. These two alternatives are available for both the uplink and downlink adjustment. In addition, the average power may be based on determination of both the uplink and downlink power between a base station and a mobile station.

It should be appreciated that whilst the exemplifying embodiments of the present invention have been described in relation to mobile stations, embodiments of the present invention are applicable to any other suitable type of user equipment. It shall be appreciated that the radio interface may be referred to as lub interface. It shall also be appreciated that in some standards the base station may be referred to differently, such as by term 'Node B'.

Furthermore, the embodiments of the present invention have been described in the context of a WCDMA system. This invention is also applicable to any access techniques including code division multiple access, frequency division multiple access, time division multiple access and space division multiple access as well as any hybrids thereof.

It is also noted herein that while the above describes exemplifying embodiments of the invention, there are several variations and modifications which may be made to the disclosed solution without departing from the scope of the present invention as defined in the appended claims.

**Claims**

1. A controller for a communications system wherein a user equipment (MS1 - MS4) may communicate with a station (10) over at least one communication channel shared with at least two user equipments, **characterised in that** the controller is adapted to allocate a data rate to be provided for said user equipment based on information about a determined average power and a common data rate target defined for all user equipments that use the at least one shared communication channel.

2. A controller as claimed in claim 1, comprising means for determining the average power that is used for communication between said user equipment and the station (10).

3. A controller as claimed in claim 1 or 2, wherein the allocated data rate depends on the distance between the user equipment (MS1 - MS4) and the station (10), the controller being adapted to determine the distance based on the determined average power.

4. A controller as claimed in claim 3, wherein the dependency is such that if the user equipment (MS1 - MS4) is located closer to the station (10) than another user equipment, the controller allocates said one user equipment with a higher data rate than said more remote user equipment.

5. A controller as claimed in claim 3 or 4, wherein the controller is adapted to allocate a user equipment (MS1) determined to be substantially close to the base station (10) with a data rate that is the common data rate target or substantially close to the common data rate target.

6. A controller as claimed in any preceding claim, wherein the average power is determined based on information associated with a dedicated channel that associates with the communication channel used by the user equipment (MS1 - MS4).

7. A controller as claimed in claim 6, wherein the dedicated channel is one of a dedicated physical control channel, a dedicated physical data channel, and a common pilot signal channel.

8. A controller as claimed in any preceding claim, wherein the average power is determined based on information associated with a Perch channel.

9. A controller as claimed in any of claims 6 to 8, wherein the information comprises the power of said channel.

10. A controller as claimed in any preceding claim, wherein the data rate target is defined when the communications system is planned or upgraded.

11. A controller as claimed in any preceding claim, wherein the data rate target is adaptive.

12. A controller as claimed in claim 11, wherein the data rate target is adapted based on information regarding the capacity of the station (10).

13. A controller as claimed in claim 11 or 12, wherein adaptation of the data rate target of the controller is periodic.

14. A controller as claimed in claim 13, wherein the controller is adapted to keep the data rate target constant for a predefined number of frames before adaptation of the data rate target is allowed.

15. A controller as claimed in any preceding claim, wherein the average power is an average power in downlink direction.

16. A controller as claimed in any of claims 1 to 14, wherein the average power is an average power in uplink direction.

17. A controller as claimed in any preceding claim being provided by a controller of the station (10).

18. A controller as claimed in any preceding claim being provided by an access network controller.

19. A controller as claimed in claim 18, wherein the access network controller is configured for use in a code division multiple access system.

20. A controller as claimed in any of claims 1 to 16, being provided by a controller of the station (10) or a controller of the user equipment (MS1-MS4).

21. A controller as claimed in any preceding claim, wherein the average transmission power is determined based on the average transmission power of a station (10) and/or mobile station (MS1 - MS4) of a cellular system.

22. A controller as claimed in any preceding claim, wherein the average transmission power is determined based on the average power in which a base station (10) and/or a mobile station (MS1 - MS4) of a cellular system receives.

23. A user equipment (MS1 - MS4) for communication with a station (10) over at least one communication channel shared with at least two user equipments, **characterised by** a controller (11) that is adapted to set a data rate for said user equipment based on information about a determined average power and a common data rate target defined for all user equipments that use the at least one shared communication channel.

24. A user equipment as claimed in claim 23 adapted for determining the average power that is used for communication between said user equipment and the station (10).

25. A user equipment as claimed in claim 23 or 24, wherein the allocated data rate depends on the distance between the user equipment (MS1 - MS4) and the station (10), the coritroller being adapted to determine the distance based on the determined average power.

26. A user equipment as claimed in claim 25, wherein the dependency is such that if the user equipment (MS1 - MS4) is located closer to the station (10) than another user equipment, the controller sets said one user equipment with a higher data rate than that of said more remote user equipment.

27. A user equipment as claimed in any of claims 23 to 26, wherein the average power is determined based on information associated with a dedicated channel that associates with the communication channel used by the user equipment (MS1 - MS4).

28. A user equipment as claimed in any of claims 23 to 27 comprising a user equipment that is configured for communication via a code division multiple access system.

29. An access network controller for a communications system wherein a user equipment (MS1 - MS4) may communicate with a station (10) of the access network over at least one communication channel shared with at least two user equipments, **characterised in that** the access network controller is adapted to allocate a data rate to be provided for said user equipment based on information about a determined average power and a common data rate target defined for all user equipments that use the at least one shared communication channel.

30. A access network controller as claimed in claim 29 adapted for determining the average power that is used for communication between said user equipment and the station (10).

31. A access network controller as claimed in claim 29 or 30, wherein the allocated data rate depends on the distance between the user equipment (MS1 - MS4) and the station (10), the access network controller being adapted to determine the distance based on the determined average power.

32. A access network controller as claimed in claim 31, wherein the dependency is such that if the user equipment (MS1 - MS4) is located closer to the station (10) than another user equipment, the access network controller sets said one user equipment with a higher data rate than that of said more remote user equipment.

33. A access network controller as claimed in any of claims 29 to 32, wherein the average power is determined based on information associated with a dedicated channel that associates with the communication channel used by the user equipment (MS1 - MS4).

34. A access network controller as claimed in any of claims 29 to 33, comprising a radio network controller for a code division multiple access system.

Fig. 1

EP 1 578 027 A2

Fig. 2

Fig. 3

Define a common data rate target for user equipment sharing at least one communication channel

Determine an average power that is used for communication between a user equipment and a base station over a channel that is different the at least one shared channel

Allocate a data rate for said user equipment based on information of the determined average power and the set common data rate target

Fig. 4